# EUROPEAN PATENT APPLICATION

(11) **EP 1 357 339 A2**
(43) Date of publication of application: **29.10.2003**
(21) Application number: 03003217.1
(22) Date of filing: 20.02.2003
(51) Int. Cl.: F25B 41/06, F16K 31/40

(54) **Solenoid control valve**

(30) Priority: 26.04.2002 JP 2002125365
(71) Applicant: TGK CO., Ltd., Tokyo 193-0942 (JP)
(72) Inventor: Hirota, Hisatoshi, Hachioji-shi, Tokyo 193-0942 (JP); Inoue, Yuusuke, Tama-shi, Tokyo 206-0822 (JP); Shiota, Toshiyuki, Hachioji-shi, Tokyo 193-0942 (JP); Tsugawa, Tokumi, Hachioji-shi, Tokyo 193-0942 (JP)
(74) Representative: Grünecker, Kinkeldey, Stockmair & Schwanhäusser Anwaltssozietät

(57) **Abstract**

In the body 1 of a solenoid control valve a valve hole of a pilot valve, a hole of a bearing 22 for supporting one end of a shaft 24 of a solenoid, and a fitting hole 18 for a sleeve 19, are formed along the same axis in a body 1. The concentricity of movable components of the solenoid is maintained when the sleeve 19 is fitted in the fitting hole 18. A pilot valve element 17 is integrally formed with the shaft 24. Set values for a main valve and the pilot valve are adjusted by a press-fit member 13 and a press-fit bearing 23. The solenoid and the body 1 are joined via a yoke 27.

## Description

This invention relates to a solenoid control valve according to claim 1 or 18, particularly for a refrigerating cycle.

As a pressure-reducing device of an automotive air conditioning system, a pilot-operated solenoid control valve is conventional which has a body containing a main valve and a pilot valve, and a solenoid for actuating the pilot valve. The solenoid is configured such that a shaft supporting a plunger is supported by two-point supports at both ends to prevent the plunger from sliding on a sleeve. Bearings supporting the shaft are coaxial with the sleeve. A clearance between the bearings and the shaft is small, to prevent that the shaft may become inclined. The hysteresis characteristic occurring when electric current supplied to the solenoid increases and decreases is reduced by the above configuration. The pilot valve includes e.g. a ball-shaped pilot valve element held on an end of a movably guided shaft supported by the body. The solenoid driving force is transmitted to the pilot valve element first via the shaft of the solenoid and then via the shaft of the pilot valve. The two shafts are needed for the following reasons: on the solenoid side, to movably support and guide the plunger along the axis of the sleeve, two bearings are necessary on the axis of the sleeve. Because the solenoid is a separate component only joined to the body the axis of the shaft of the solenoid and the axis of the shaft of the pilot valve may not be accurately aligned with each other. So two separate shafts are used for compensating any axes misalignments. Component part assembly and adjustments in the conventional solenoid control valve are made with screws. Respective sealing functions are effected by rubber O-rings. The solenoid and the body have fitting portions formed with screw threads, and are joined by screwing the solenoid into the body. A set value for the solenoid control valve is adjusted by the load of a spring of the main valve, normally by adjusting the screwing depth of an adjusting screw. In the solenoid the load of a spring for the plunger is adjusted by adjusting the screwing depth of an adjusting screw. When the solenoid with reduced hysteresis characteristic is screwed into the body, the shaft holding the pilot valve element is driven by the shaft of the solenoid. It, therefore, is necessary to provide a portion for the bearing supporting one end of the shaft of the solenoid, and to provide connecting portions of the solenoid and the body. Thus, an increased number of component parts is required, increasing the manufacturing costs. The connecting portions and portions of the body and the solenoid for the adjusting screws require machining of thread portions, which further increases the manufacturing costs. It is known that refrigerant may permeate rubber O-rings and leaks through, e.g. depending on the refrigerant used. Therefore, there is a need for minimizing the number of rubber O-rings.

It is an object of the invention to provide a solenoid control valve of simple construction and for low cost, mainly by reducing the number of component parts, by eliminating machined thread portions, and by minimizing the number of rubber O-rings.

The present invention addresses these objects by a solenoid control valve according to claim 1 or claim 18.

In this solenoid control valve, the shaft of the solenoid and the pilot valve element of the pilot valve are integrally formed with each other, whereby it is possible to decrease the number of component parts, thereby reducing the manufacturing costs.

A valve hole of the pilot valve, a bearing hole of the first bearing, and a fitting hole in which is fitted one end of a sleeve containing a plunger of the solenoid are formed along the same axis in the body. The machining of these holes is carried out on the same member. When the sleeve is fitted in the fitting hole, it is possible to accurately maintain movable components of the solenoid coaxially. The shaft of the solenoid can be introduced into the body such that concentricity of the shaft and of the bearing hole of the first bearing in the body are assured. The second bearing member is press-fit along an axis of a hollow cylindrical core fitted in the other end of the sleeve, and allows to adjust the load of a spring in the solenoid for the pilot valve element by selectively adjusting the press-in depth of the second bearing and to dispense with adjusting screws for reducing the manufacturing costs. The hole of the core is closed by a first press-fit member. The chamber containing a first spring for a valve element of the main valve is closed by a second press-fit member, which avoids the need to provide extra sealings and allows to adjust the load of the first spring by selectively determining the press-in depth of the second press-fit member without adjusting screws. Preferably, the solenoid is joined to the body by caulking one end of a yoke surrounding the solenoid. This avoids threaded connecting portions and reduces the manufacturing costs. Since the number of component parts for connecting the solenoid and the body, of components for transmitting the force of the solenoid to the pilot valve element, and of sealing members are reduced and no threads need to be formed, the solenoid control valve is simple in construction and low in cost. The number of O-rings is a minimum. The operation lifetime of an air conditioning system can be extended without deterioration by permeation leakage in the solenoid contral valve.

Embodiments of the invention will be described in detail with reference to the drawings, where exemplarily a solenoid control valve is applied to an expansion valve in a refrigeration cycle of an automotive air conditioning system. In the drawings is:
- Fig. 1: a longitudinal section of a first embodiment of a solenoid control valve,
- Fig. 2: a longitudinal section of a second embodiment,
- Fig. 3: a longitudinal section of a third embodiment,
- Fig. 4: a longitudinal section of a fourth embodiment,
- Fig. 5: a longitudinal section of a fifth embodiment,
- Fig. 6: a longitudinal section of a sixth embodiment,
- Fig. 7: a longitudinal section of a seventh embodiment,
- Fig. 8 (A): a cross-section taken on line a-a of Fig. 7,
- Fig. 8 (B): a cross-section taken on line b-b of Fig. 8 (A),
- Fig. 9 (A): the solenoid control valve adjusted for a first flow direction, and
- Fig. 9 (B): the solenoid control valve adjusted for a second flow direction.

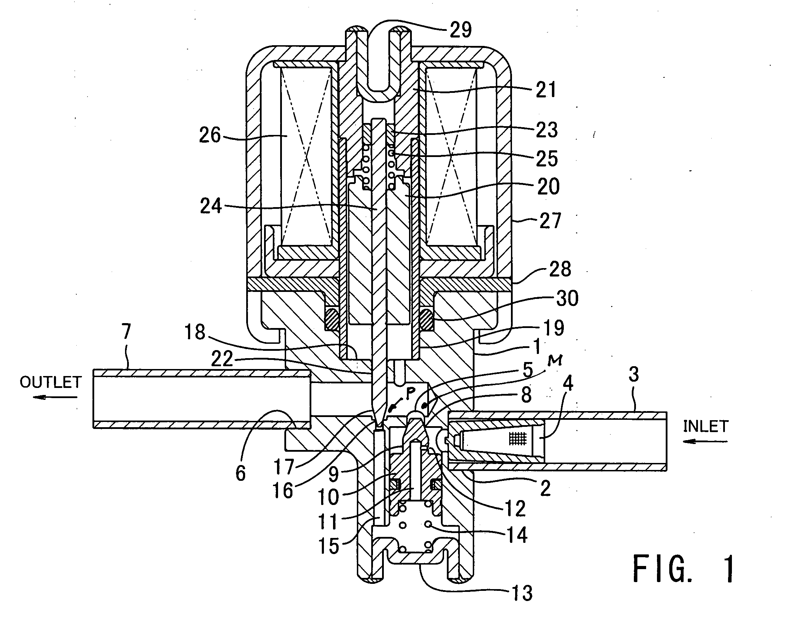

A solenoid control valve in Fig. 1 has an inlet port 2 in a side surface of a body 1, for receiving high-pressure refrigerant. To the inlet port 2 is welded a refrigerant piping 3 which contains a strainer 4. The inlet port 2 communicates with an outlet port 6 via a refrigerant passage 5. The outlet port 6 has a refrigerant piping 7 welded thereto. In refrigerant passage 5, a main valve seat 8 is integrally formed with the body 1. A main valve element 9 is arranged in a manner opposed to the main valve seat 8 from the upstream side of a main valve M, and is integral with an axially movable piston 10 bounding a chamber together with the main valve seat 8. The piston 10 has a central refrigerant passage 11 communicating with a lateral and restricted orifice 12 such that high-pressure refrigerant from the chamber on an upper side of the piston 10 is throttled while flowing into a space on a lower side of the piston 10. This space is closed by a press-fit member 13. Between the piston 10 and the press-fit member 13, there is a spring 14 urging the piston 10 in a main valve-closing direction. The press-fit member 13 has a lower end portion which may be welded to the body 1 after adjusting the load of the spring 14 by selectively adjusting the press-in depth during the press-fitting procedure.

A chamber between the piston 10 and the press-fit member 13 communicates with the downstream side of the main valve M, that is, a space communicating with the outlet port 6 via a refrigerant passage 15 in the body 1. A pilot valve seat 16 of a pilot valve P is formed at a location between the refrigerant passage 15 and the space. A needle-shaped pilot valve element 17 is arranged downstream of the pilot valve seat 16.

A solenoid assembly for the pilot valve is secured to an upper portion of the body 1. The solenoid comprises a sleeve 19 with a lower end portion fitted in a fitting hole 18 in the body 1, a plunger 20 axially movably arranged in the sleeve 19, a hollow cylindrical core 21 fitted in an upper end of the sleeve 19, a shaft 24 fixedly arranged in the plunger 20 and protruding beyond the plunger 20 with both ends. The lower end of the shaft 27 is supported and guided by a bearing 22 formed in the body 1. The upper end of the shaft 27 is supported and guided by a bearing 23 press-fitted into an axial hole of the core 21. A spring 25 between the plunger 20 and the bearing 23 urges the pilot valve element 17 in a valve-closing direction via the shaft 24. A solenoid coil 26 arranged outside the sleeve 19, a yoke 27 surrounding the solenoid coil 26, and a plate 28 between the yoke 27 and the sleeve 19 establish a magnetic circuit. The core hole has an end closed by a press-fit member 29, sealed e.g. by welding. A rubber O-ring 30 is arranged in a space surrounded by the body 1, the sleeve 19, and the plate 28.

The shaft 24 is integral with the pilot valve element 17. A valve hole of the pilot valve P, a hole of the bearing 22, and the fitting hole 18 containing the sleeve 19 are formed in the body 1, all along the same axis, such that the pilot valve element 17 integral with an end of the shaft 24 is guided in alignment with the valve hole of valve seat 16 of the pilot valve P, which valve hole is formed substantially coaxial with the pilot valve element 17. The hole of the bearing 22 provides a clearance between the bearing 22 and the shaft 24 slightly larger than a clearance between the bearing 23 and the shaft 24. However, the magnitude of the clearance is set such that plunger 20 does not abut at the sleeve 19 even when the shaft 24 should become inclined with the bearing 23 as a fulcrum (good hysteresis characteristic). The load of the spring 25 between the plunger 20 and the bearing 23 is adjusted by adjusting the insertion depth of the bearing 23 into the core 21 during press-fitting. The solenoid is secured to the body 1 by caulking a lower end of the yoke 27 around a flange of the body 1.

When the solenoid coil 26 is not energized, no refrigerant is introduced at inlet port 2; the main valve element 9 seats on the main valve seat 8 by the spring 14. The pilot valve element 17 is seated on the pilot valve seat 16 by the spring 25.

When high-pressure refrigerant is introduced into the inlet port 2, the refrigerant reaches the chamber above the piston 10 then the chamber below the piston 10 via the orifice 12 and further the pilot valve P via the refrigerant passage 15 in the body 1. As soon as the differential pressure across the pilot valve P exceeds a predetermined value, the pilot valve element 17 is lifted. Refrigerant flows to the outlet port 6. This reduces the pressure in the chamber below the piston 10. The piston 10 moves downward, so the main valve element 9 clears the main valve seat 8. Refrigerant flows out into the outlet port 6.

As the refrigerant flows out the refrigerant pressure upstream of the main valve M is reduced, as well as the pressure supplied to the pilot valve P. The pilot valve element 17 moves in valve-closing direction. This increases the pressure below the piston 10, which moves upward. The main valve element 9 is urged in valve-closing direction and reduces the flow rate to increase the pressure upstream of the main valve M. The above operations are repeated to control the differential pressure across the main valve M to a fixed value, determined by spring 25.

When the solenoid coil 26 is energized, the plunger 20 is attracted toward the core 21, and the spring force of spring 25 urging the pilot valve element 17 in valve-closing direction is reduced to decrease the set differential pressure. When the value of electric current energizing the solenoid coil 26 is increased, the force for attracting the plunger 20 to the core 21 is increased, to further decrease the set differential pressure set to the pilot valve P, and also across a differential pressure valve.

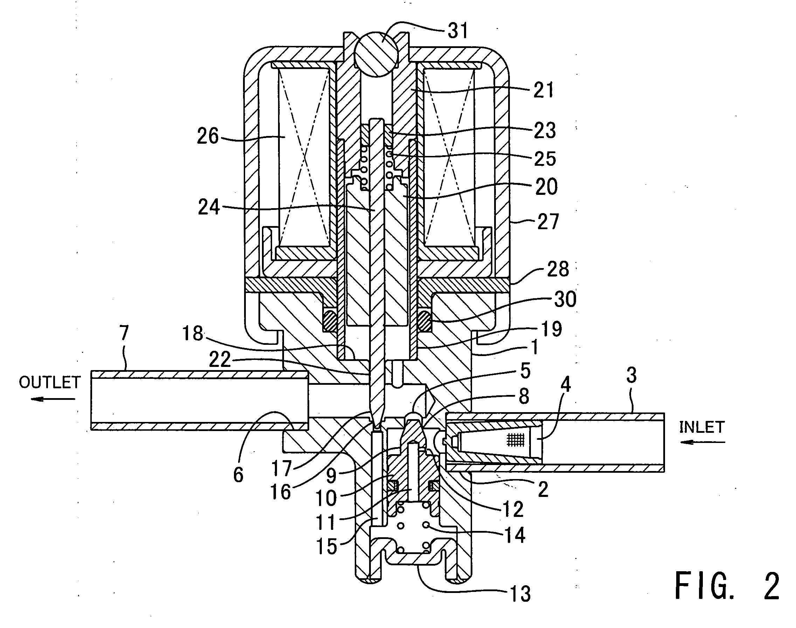

The second embodiment of Fig. 2 has an inexpensive ball 31 sealing the solenoid from outside.

A hole in a central portion of the core 21 is closed by press-fitting the ball 31 in an end of the hole. The ball 31 is rigidly and sealingly fixed by a caulked end of the core 21.

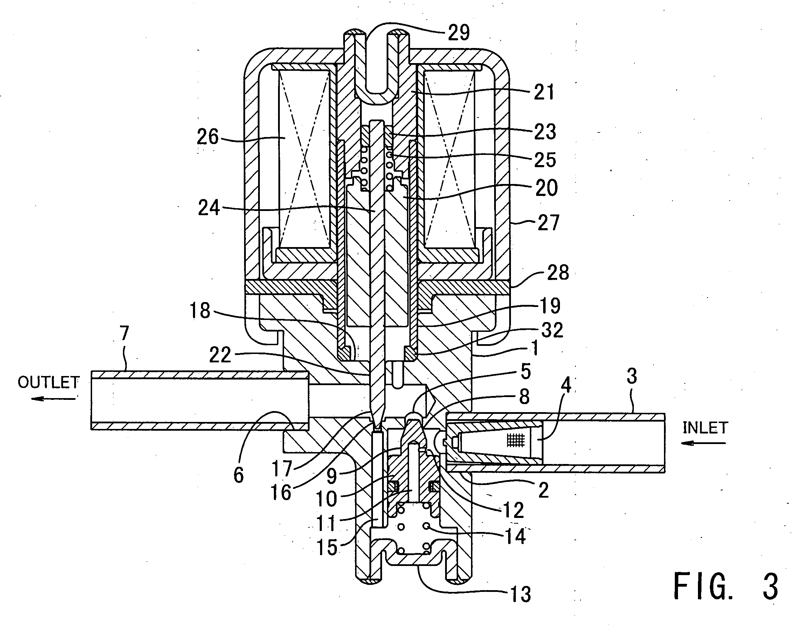

The third embodiment of Fig. 3 has a packing 32 to seal a juncture between the solenoid and the body 1.

The packing 32 has an annular shape and is arranged on a bottom of the fitting hole 18 of the body 1. When the sleeve 19 is fitted in the fitting hole 18, the packing 32 is press-fitted against the bottom of the fitting hole 18 by an end of the sleeve 19 formed in an acute angle, thereby effecting seal also from outside. The packing 32 can be made of polytetrafluoroethylene, or a soft metal, such as copper or aluminum.

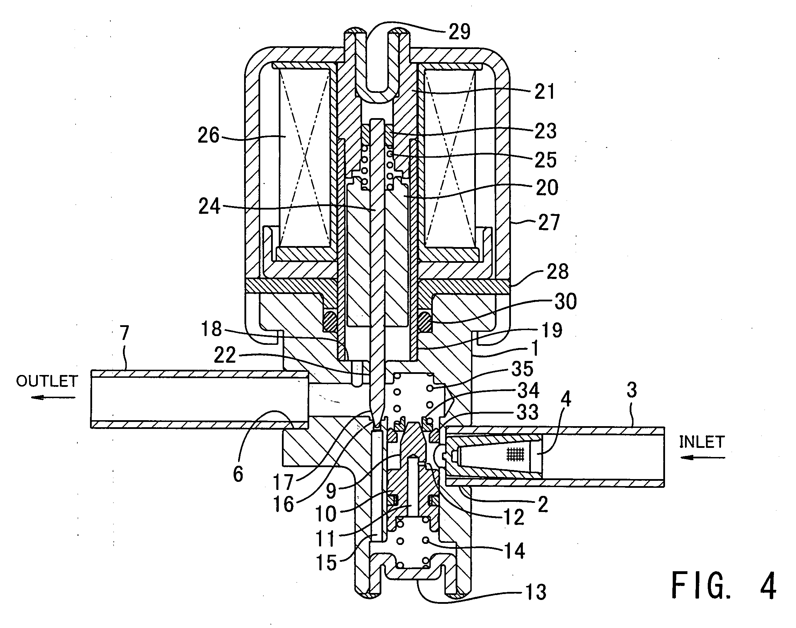

The fourth embodiment of Fig. 4 has added high pressure-avoiding capability.

A press-fit ring 33 is arranged at an intermediate portion of a refrigerant passage of the body 1 between the inlet and outlet ports 2, 6. An annular plug 34 is movably arranged on the press-fit ring 33 downstream side. A spring 35 urges the plug 34 in a direction of abutment with the press-fit ring 33. Components 35, 34, 33 form a relief valve to relieve high pressure between the components 33, 34 from upstream of the main valve M to escape to the downstream side thereof, when the pressure on the inlet port side becomes abnormally high. The plug 34 serves as a valve element, and the press-fit ring 33 serves as a valve seat of the relief valve.

The spring 35 has a sufficiently larger spring force than the spring 14 below the piston 10. Normally, the plug 34 is seated on the press-fit ring 33 such that the press-fit ring 33 and the plug 34 commonly form the valve seat of the main valve M. The load of the spring 35 is adjusted by adjusting the amount of insertion of the press-fit ring 33 during press-fitting.

The purpose of the relief valve 33, 34, 35 is as follows: in the refrigeration cycle of an automotive air conditioning system, refrigerant compressed by a compressor is introduced into a condenser or a gas cooler, where it is condensed or cooled, and then guided into a pressure-reducing device. When a fluorocarbon-based refrigerant is used, the pressure does not become abnormally high, since the refrigerant is condensed by the condenser. However, when carbon dioxide is employed, the refrigerant is not condensed simply by being cooled by the gas cooler, since it is compressed to such an extent that the pressure thereof exceeds a critical point or a maximum pressure at which the refrigerant can be condensed. Therefore, particularly at the start of the compressor or on a similar occasion, the pressure of the refrigerant tends to sharply increase. Although the pressure of carbon dioxide refrigerant is monitored by a pressure sensor, and the compressor is separated from an output shaft of an engine by a solenoid clutch when abnormally high pressure is detected, the separation causes degradation of the starting ability of the automotive air conditioning system. This inconvenience can be eliminated by adding the high pressure-avoiding capability to the solenoid control valve, as mentioned above in connection with Fig. 4.

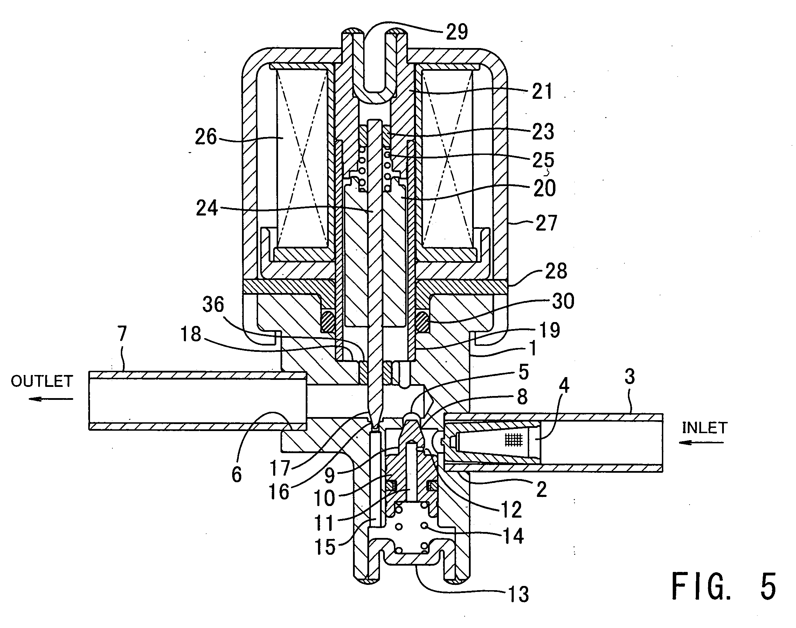

In the fifth embodiment of Fig. 5, a bearing 36 for guiding and supporting the lower end portion of the shaft 24 is press-fitted into a hole formed in the body 1.

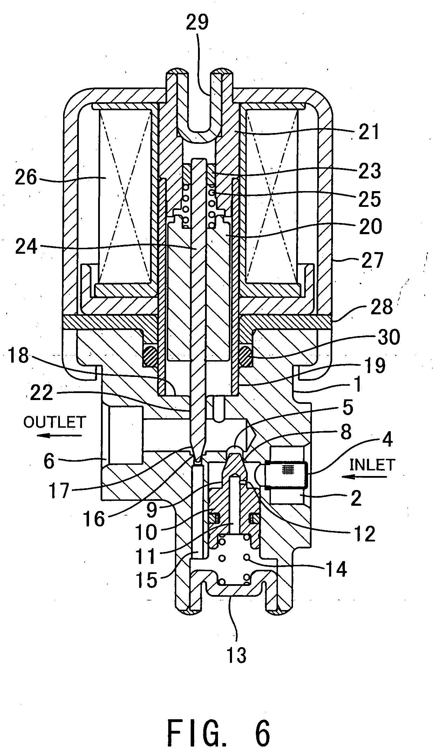

In the sixth embodiment of Fig. 6, the piping joints are modified in construction. The inlet 2 and outlet ports 2, 6 are configured such that the refrigerant pipings carrying O-rings only need to be fitted in the ports 2, 6 to effect the sealed connection.

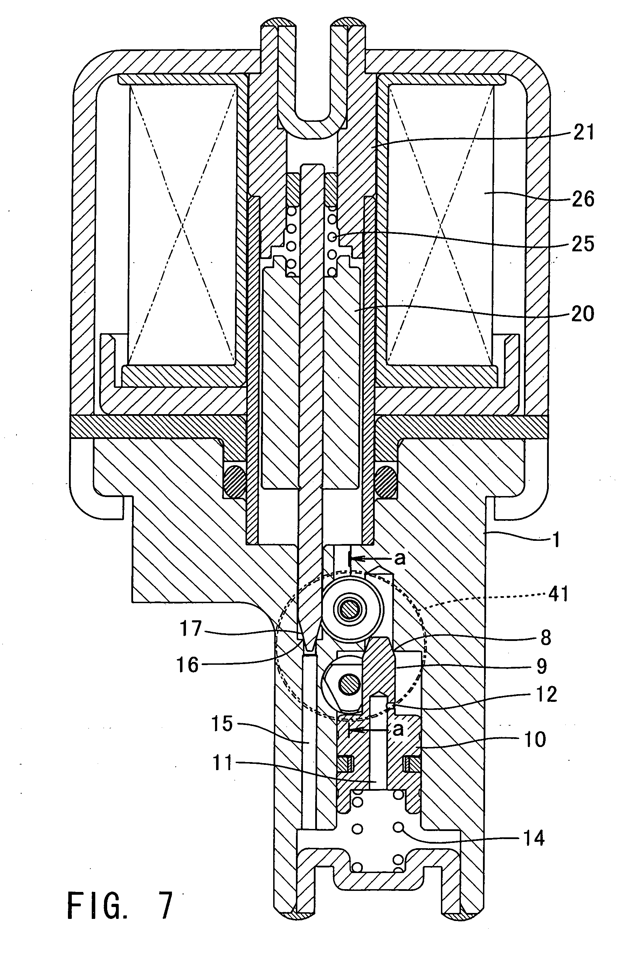

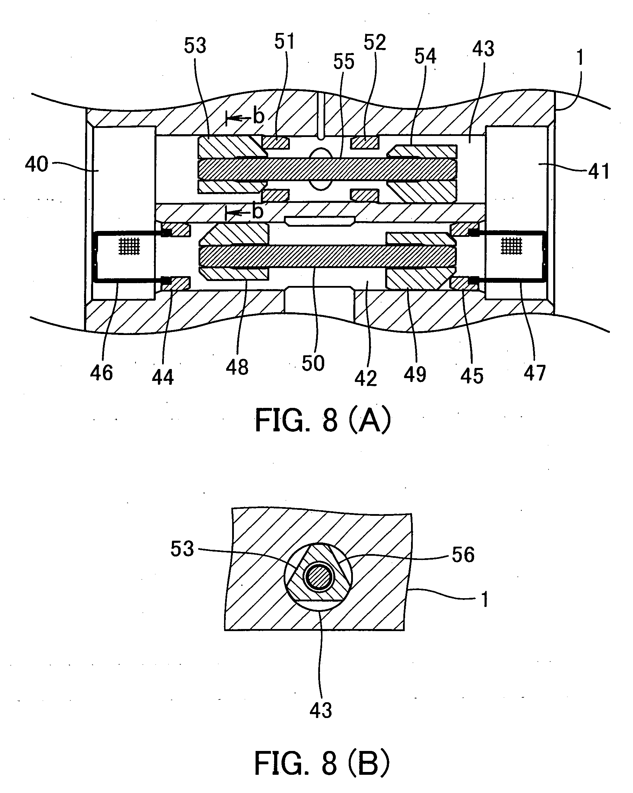

The seventh embodiment of Figs 7, 8 (A), 8 (B), 9 (A), 9 (B) has first and second ports 40, 41 in the body 1 (inlet and outlet, respectively). As shown in Fig. 8 (A), an inlet refrigerant passage 42 and an outlet refrigerant passage 43 are formed between the first and second ports 40, 41.

The inlet refrigerant passage 42 contains valve seats 44, 45 and strainers 46, 47 at both ends. Opposed to and inside the valve seats 44, 45, valve elements 48, 49, coupled by a shaft 50 are movably arranged. Thus, the valve elements 48, 49, and the valve seats 44, 45 form two check valves which permit alternating inwardly directed flows from both outsides. A space between the valve elements 48, 49 communicates with a chamber on the upstream side of the main valve M, defined by the main valve element 9 and the piston 10, and the main valve seat 8.

The outlet refrigerant passage 43 has inner valve seats 51, 52, and movable valve elements 53, 54, coupled by a shaft 55 arranged outside of the valve seats 51, 52. The valve elements 53, 54, and the valve seats 51, 52 form two check valves which permit refrigerant to flow from the inside of the outlet refrigerant passage 43 alternatingly to both outsides. A space between the valve seats 51, 52 communicates with a space on the downstream side of the main valve M and the pilot valve P.

In Fig. 8 (B) the valve elements 48, 49, and the valve elements 53, 54 each have e.g. three peripheral cut-away portions 56 which form refrigerant passages.

When the solenoid coil 26 is not energized and refrigerant is not introduced into the first port 40 or the second port 41 (Fig. 7), the main valve element 9 is seated on the main valve seat 8 by the spring 14. The pilot valve element 17 as well is seated on the pilot valve seat 16 by the spring 25.

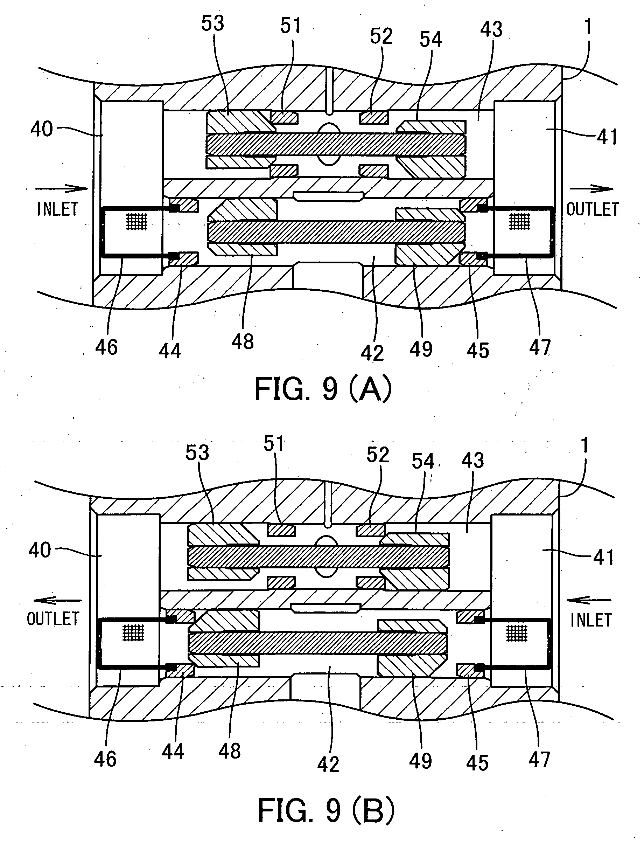

When high-pressure refrigerant is introduced into the first port 40 (Fig. 9 (A)), the refrigerant seats the valve element 53 in the outlet refrigerant passage 43 on the valve seat 51. At the same time, the refrigerant in the inlet refrigerant passage 42 pushes the valve element 48 away from the valve seat 44. The other valve element 54 in the outlet refrigerant passage 43 is moved away from the valve seat 52 as it is interlocked with the valve element 53. The space in the central portion of the outlet refrigerant passage 43 is communicated with the second port 41. The other valve element 49 in the inlet refrigerant passage 42 is seated on the valve seat 45 as it is interlocked with the valve element 48. The space in the central portion of the inlet refrigerant passage 42 is disconnected from the second port 41.

The refrigerant flowing from the first port 40 into the inlet refrigerant passage 42 by pushing open the check valve, passes through the refrigerant passages formed by the cut-away portions 56 around valve element 48, into the space defined between the valve elements 48, 49, and enters the chamber on the upstream side of the main valve M. This refrigerant is supplied to the pilot valve P via the orifice 12 and refrigerant passages 11, 15. When the differential pressure across the pilot valve P exceeds a predetermined value, the refrigerant pushes open the pilot valve element 17, and flows into the space between the valve seats 51, 52 in the central portion of the outlet refrigerant passage 43. This reduces pressure in the chamber below the piston 10. The piston 10 moves downward, and the main valve element 9 is moved away from the main valve seat 8. The refrigerant introduced into the first port 40 flows out into the space between the valve seats 51, 52 in the outlet refrigerant passage 43. Further, the refrigerant flows into the second port 41 through the check valve whose valve element 54 is moved away from the valve seat 52, and the refrigerant passages formed by the cut-away portions 56 formed along the periphery of the valve element 54.

The outflow of the refrigerant into the second port 41 reduces the pressure of refrigerant on the upstream side of the main valve M, and the pressure supplied to the pilot valve P. The pilot valve element 17 moves in valve-closing direction. This causes a pressure increase in the chamber below the piston 10. The piston 10 moves upward and the main valve element 9 is urged in valve-closing direction, to reduce the flow rate and to increase the pressure upstream of the main valve M. The above operations are repeatedly carried out to thereby control the differential pressure across the main valve to a fixed value. A maximum differential pressure set to the pilot valve (solenoid not energized) is determined by the load of the spring 25. The load is set by the press-fit position of the bearing 23.

When high-pressure refrigerant is introduced into the second port 41 (FIG. 9 (B)), the refrigerant pushes the valve element 54 in the outlet refrigerant passage 43 on the valve seat 52. At the same time, the refrigerant flowing into the inlet refrigerant passage 42 lifts the valve element 49 away from the valve seat 45. The other valve element 53 in the outlet refrigerant passage 43 is moved away from the valve seat 51 as it is interlocked with the valve element 54. The space in the central portion of the outlet refrigerant passage 43 communicates with the first port 40. The other valve element 48 in the inlet refrigerant passage 42 is seated on the valve seat 44 as it is interlocked with the valve element 49. The space in the central portion of the inlet refrigerant passage 42 is disconnected from the first port 40.

Refrigerant flowing from the second port 41 into the inlet refrigerant passage 42 by opening the check valve on the second port side enters the chamber on the upstream side of the main valve M, and reaches the pilot valve via the orifice 12 and the refrigerant passages 11, 15. When the differential pressure across the pilot valve P exceeds a predetermined value, the refrigerant pushes the pilot valve element 17 open and flows into the first port 40 through the space in the central portion of the outlet refrigerant passage 43, and the check valve on the first port side. This reduces the pressure in the chamber below the piston 10. The piston 10 moves downward and the main valve element 9 moves away from the main valve seat 8. The refrigerant flows into the first port 40 through the space in the central portion of the outlet refrigerant passage 43, and the check valve on the first port side. The following operations are the same as those carried out when the high-pressure refrigerant is introduced into the first port 40.

When the solenoid coil 26 is energized, the plunger 20 is attracted toward the core 21. The force of the spring 25 urging the pilot valve element 17 in valve-closing direction is reduced to decrease the differential pressure set to the pilot valve. When the value of electric current energizing the solenoid coil 26 is increased, the force attracting the plunger 20 toward the core 21 is increased, to further decrease the differential pressure set to the pilot valve, that is, the differential pressure across the differential pressure valve.

Although in the above first to seventh embodiments, so as to supply reduced-pressure refrigerant to the pilot valve P, the restricted passage is formed by the orifice 12 and the refrigerant passage 11 in the piston 10, it is instead possible to employ an orifice directly formed in the piston 10 such that it extends therethrough. Further, as for the restricted passage, the orifice 12 may be replaced by an axial groove formed in the outer periphery of the piston 10, or alternatively, by an intentional clearance between the piston 10 and a cylinder guiding the piston.

## Claims

1. A solenoid control valve of a pilot-operated type for controlling a flow rate of refrigerant through a main valve (M) such that a differential pressure between an inlet (3) and an outlet (7) of a body (1) becomes equal to a differential pressure set based on a value of an electric current caused to flow through a coil (26) of a solenoid,
**characterized in that** an axially movably arranged shaft (24) of the solenoid for actuating a pilot valve (P) of the main valve (M) and a pilot valve element (17) both are integrally formed with each other, the shaft having two end portions, of which one end portion is supported and guided by a first bearing (22, 36) arranged on the side of the body (1) containing the main valve (M), and the other is supported and guided by a second (23) bearing arranged within the solenoid.

2. Solenoid control valve as in claim 1, **characterized in that** a valve hole of a valve seat (16) of the pilot valve (P), a bearing hole of the first bearing (22, 36), and a fitting hole (18) in the body (1) in which is fitted one end of a sleeve (19) containing a plunger (20) of the solenoid are formed along the same axis in the body (1).

3. Solenoid control valve as in claim 2, **characterized in that** the first bearing (22) is a bearing hole formed in the body (1), and that the second bearing (23) is a press-fit bearing member arranged along an axis of a hollow cylindrical core (21) fitted in the other end of the sleeve (19).

4. Solenoid control valve as in claim 2, **characterized in that** the first bearing (36) is a first press-fit bearing member arranged in a bearing hole formed in the body (1), and that the second bearing is a second press-fit bearing member (23) arranged along an axis of a hollow cylindrical core (21) fitted in the other end of the sleeve (19).

5. Solenoid control valve as in claim 3 or 4, **characterized in that** the first bearing (22, 23) defines a radial clearance with the shaft (24), the clearance being large enough to prevent the plunger (20) from abutting with the sleeve (19) when the shaft (24) is inclined.

6. Solenoid control valve as in claim 3 or 4, **characterized in that** an end of a hole through a central portion of the core (21) is closed by a first press-fit member (29, 31), preferably sealed by being welded to the core (21), or by a ball fixed in the core (21) by caulking the end of the core hole.

7. Solenoid control valve as in claim 1, **characterized in that** a chamber containing a first spring (14) urging a valve element (10) of the main valve (M) in a valve-closing direction is closed by a second sealed press-fit member (13), preferably either sealed by being welded to the body (1), or secured in place by a press-fit.

8. Solenoid control valve as in claim 7, **characterized in that** the load of the first spring (14) is adjusted by adjusting the press-in amount of the second press-fit member by a selected press-fitting depth of the second press-fit member (13)

9. Solenoid control valve as in claim 3 or 4, **characterized in that** a load of a second spring (25) arranged between the second bearing (23) and the plunger (20) fixed to the shaft (24), for urging the pilot valve element (17) in a valve-closing direction is adjusted by adjusting a press-fit amount of the second bearing (23) by a selected press-fitting depth of the second bearing into the hole of the core (21).

10. Solenoid control valve as in claim 1, **characterized in that** the solenoid is joined to the body (1) by caulking one end of a yoke (27) surrounding an outside of the solenoid.

11. Solenoid control valve as in claim 2, **characterized in that** an O-ring (30) is arranged in the fitting hole (18) between the body (1) and the sleeve (19).

12. Solenoid control valve as in claim 2, **characterized in that** a packing is arranged in the fitting hole (18) between the body (1) and an end of the sleeve (10).

13. Solenoid control valve as in claim 1, **characterized by** a relief valve (33, 34, 35) for causing the fluid introduced into the solenoid control valve to bypass the main valve (M) when a pressure of the fluid is equal to or larger than a predetermined pressure.

14. Solenoid control valve as in claim 13, **characterized in that** the relief valve (33, 34, 35) includes a plug (34) on a downstream side of the main valve (M) in a manner movable forward and backward in the same directions in which the main valve element moves forward and backward and has a valve hole formed in a center thereof to form a valve seat of the main valve (M), a third spring (35) stronger than the first spring (14) urging the valve element (10) of the main valve (M) in valve-closing direction, the third spring (35) urging plug (34) in a direction toward the main valve (M), and a press-fit ring (33) secured in the body (1) for abutment by the plug (34) by the third spring (35).

15. Solenoid control valve as in claim 14, **characterized in that** a load of the third spring (35) is adjusted by adjusting the press-in amount of the press-fit ring (33) in the body (1) by a selected press-fitting depth.

16. Solenoid control valve as in claim 1, **characterized in that** first piping (3) for introducing the fluid into a first space on an upstream side of the main valve (M), and second piping (7) for allowing the fluid to flow out from a second space on a downstream side of the main valve (M) are weld connected to the body (1) and that the body (1) includes inlet and outlet ports (2, 6) for fitting therein the first and second pipings (3, 7).

17. Solenoid control valve as in claim 1, **characterized by** first and second check valves (51, 53; 52, 54) arranged between first and second ports (40, 41), and a first space on an upstream side of the main valve (M), respectively, for permitting fluid flow from the first port (40) and the second port (41) to the first space, and third and fourth check valves (44, 48, 45, 49) arranged between the first and second ports (40, 41), and a second space on a downstream side of the main valve (M), respectively, for permitting fluid flow from the second space to the first port (40) and the second port (41), wherein the main valve (M) is configured for enabling the fluid to flow bi-directionally between the first and second ports (40, 41) while causing the fluid to flow in one direction.

18. A solenoid control valve of a pilot-operated type for controlling a flow rate of refrigerant through a main valve (M), particularly in a refrigerating cycle of an automotive air conditioning system, such that the differential pressure between an inlet (2) and an outlet (6) of a body (1) becomes equal to a differential pressure set based on a value of an electric current forced to flow through a coil (26) of a solenoid for actuating a pilot valve element (17) in relation to a pilot valve seat (16) via a plunger (20) co-acting with a fixed core (21), **characterized in that** a shaft (24) held by the plunger (20) and the pilot valve element (17) form a single one piece component, that the pilot valve seat (16) is formed in the body (1) in axial alignment with the shaft (24), that a first bearing (22, 36) for supporting and axially guiding the shaft is arranged in the center of a fitting hole (18) formed in the body (1) in axial alignment with the pilot valve seat (16), that a second bearing (23) for axially guiding and supporting the shaft (24) is axially aligned with the pilot valve seat (16) by means of a positioning sleeve (19) of the solenoid, the positioning sleeve (19) being secured into the fitting hole (18) of the body (1), and that the core (21) is positioned in axial alignment with the pilot valve seat (16) by the positioning sleeve (19).

19. Solenoid control valve as in claim 18, **characterized in that** the core (21) of the solenoid is press-fitted into the positioning sleeve (19), that the core (21) has a central hole axially aligned with the pilot valve seat (16), and that the second bearing (23) is press-fitted into the core hole.
